# EUROPEAN PATENT SPECIFICATION

(11) **EP 4 433 616 B1**
(45) Date of publication and mention of the grant of the patent: **25.06.2025**
(21) Application number: 22822646.0
(22) Date of filing: 15.11.2022
(51) Int. Cl.: C14B 1/56, B05C 1/08, B32B 9/02, B32B 25/08, B32B 27/38, B32B 27/40, C14B 7/04

(54) **METHOD FOR PRODUCING A MULTILAYER LAMINAR PRODUCT AND PLANT FOR IMPLEMENTING SAID METHOD**
VERFAHREN ZUR HERSTELLUNG EINES MEHRSCHICHTIGEN LAMINAREN PRODUKTS UND ANLAGE ZUR DURCHFÜHRUNG DES VERFAHRENS
PROCÉDÉ DE PRODUCTION D'UN PRODUIT LAMINAIRE MULTICOUCHE ET INSTALLATION POUR METTRE EN OEUVRE LEDIT PROCÉDÉ

(30) Priority: 17.11.2021 IT 202100029126
(43) Date of publication of application: 25.09.2024
(73) Proprietor: COS.T.A. S.R.L., 36054 Montebello Vicentino (VI) (IT)
(72) Inventor: ROVETTI, Mariano, 36050 MONTORSO VICENTINO (VI) (IT)
(74) Representative: Marchioro, Paolo
(86) International application number: PCT/IB2022/060977
(87) International publication number: WO 2023/089477

(56) References cited:
- EP-A1- 3 464 652
- EP-A1- 3 589 489
- EP-A1- 3 862 444

## Description

The present invention relates to a method for producing a multilayer laminar product particularly suitable for ennobling leathers.

The present invention also relates to a plant for implementing the aforesaid method.

As is well known, so-called "ennobling" processes are used in the leather processing sector allowing to increase the commercial value of low-grade leather.

In fact, one of the first stages of leather processing consists in separating the most valuable outer layer, called "grain" in jargon, from a less valuable lower layer, which in turn is eventually divided into further layers. In the following, the term "leather" will mean not only a leather in its entirety, but also and above all any of the layers obtained from it, in particular the less valuable ones.

Basically, an ennobling process of known type envisages covering the surface of the leather intended to be visible during use with a layer of plastic material, generally polyurethane. The aforesaid layer allows to cover the superficial defects of the leather and to give it a similar appearance to that of a more valuable leather.

A similar process can also be used to give a fabric, synthetic or otherwise, a leather-like appearance, in which case we speak of "imitation leather". Obviously, what will be described below is also fully applicable to the latter process.

Generally, during the ennobling process an embossing is also printed on the surface of the product, in order to achieve special aesthetic effects that contribute to increasing the value of the product.

A technique of known type suitable for ennobling leathers, described in Italian patent application VI2005A000080 on behalf of the Applicant of the present invention, envisages covering a laminar support, for example a leather to be ennobled, with a layer of polyurethane resin.

Subsequently, an embossed paper is compressed against the layer of polyurethane resin that has not been fully polymerized and, therefore, still has a soft consistency, in order to imprint the pattern of the embossed paper on this layer.

The technique then envisages polymerizing the polyurethane resin so as to make it adhere stably to the laminar support.

After the resin has been polymerized, the embossed paper is removed from the laminar support so as to obtain the final product. To facilitate the removal of the paper and prevent it from adhering to the polyurethane resin, the embossed paper is previously covered with a protective film, also made of polyurethane, which prevents direct contact between the polyurethane resin and the embossed paper. This film becomes an integral part of the polyurethane resin during the polymerization described above.

The aforesaid known technique has some recognized drawbacks.

A first drawback stems from the fact that the width of the plant, and therefore the width of the treatable leather, is conditioned by the width of the commercially available embossed paper, which usually does not exceed 2000 mm.

This aspect is limiting, considering that some leathers reach up to 3500 mm and above. In order to use the technique described above with such wide leathers, it is necessary to cut the latter according to their longitudinal direction so as to obtain strips of width less than the width of the paper, which are processed one after the other.

The aforesaid known technique has the further disadvantage that the embossed papers available on the market are not provided with the protective film, which therefore must be made in the same leather ennobling plant. In ennobling plants of the known type, the film is made by applying a thin layer of polyurethane resin to the paper, for example by spreading with a blade, spreading with a cylinder, spraying with guns, etc. The resin is then made to solidify in the furnace to obtain the film.

It is understood that the aforesaid operation has the disadvantage of affecting the cost of the process and the overall size of the plant.

A further drawback of the known technique described above is related to the cost of the embossed paper, accentuated by the fact that the paper must have an adequate pulp and grammage to withstand the mechanical, chemical and thermal stresses produced during processing. Evidently, the cost of the embossed paper affects the cost of the manufacturing process.

To limit the costs related to the embossed paper, downstream of the polymerization process there is a device that removes the portion of film left on the embossed paper so that it can be reused. However, the aforesaid device contributes to the increase in the overall size and costs of the plant, as well as in the costs of the process.

A further drawback of the above-described technique stems from the fact that the embossed paper requires periodic replacement, contributing to further increase the process costs.

A method for producing a multilayer laminar product according to the preamble of claim 1 is already known from EP 3 464 652 A1.

The present invention aims to overcome all the above-mentioned drawbacks inherent in the ennobling technique of known type described above and the related plants.

In particular, it is an object of the present invention to realize a method for producing a multilayer laminar product, in particular of ennobled leathers, which allows the processing of products with widths greater than those allowed by the known technique described above.

It is also an object of the present invention to propose a method for producing a multilayer laminar product, the implementation of which is less expensive than analogous methods belonging to the prior art.

In particular, it is an object of the present invention to avoid the use of embossed paper.

This object also makes it possible to obtain plants for the implementation of the aforesaid method, which are less complex and therefore less expensive and more reliable than plants for the implementation of methods belonging to the prior art.

The aforesaid objects are achieved by a method for producing a multilayer laminar product, in particular an ennobled leather, according to claim 1.

The aforesaid objects are also achieved by a plant for producing the aforesaid multilayer laminar product according to claim 12.

Further detailed features of the invention are given in the dependent claims.

Advantageously, the technique of the invention makes it possible to process high-width leathers.

This advantageously makes it possible to obtain products intended for fields of application outside the scope of the products obtained by the known technique.

In addition, advantageously, the possibility of processing the leathers without cutting them avoids producing waste of raw material.

Therefore, it is understood that the technique of the invention is particularly suited to the processing of valuable leathers of considerable sizes.

Still advantageously, the fact of not using embossed paper allows reducing the costs related to the latter.

In particular, the absence of processes and devices for depositing the protective film on the paper and for removing it allows to reduce the costs and the overall size of the plant, as well as the costs of processing.

The aforesaid objects and advantages, together with others that will be mentioned hereinafter, will appear as clear during the following description of a preferred embodiment of the invention, which is given by way of non-limiting example with reference to the accompanying drawings, where:
- Figs. 1(a)-1(f) schematically represent different steps of the method of the invention according to a first preferred embodiment, in the application to a laminar support;
- Figs. 2(a)-1(h) schematically represent different steps of the method of the invention according to a second preferred embodiment, in the application to a laminar support;
- Fig. 3 represents the plant of the invention, in side view, according to the aforesaid first preferred embodiment;
- Fig. 4 represents a detail of a first embodiment variant of the plant of Fig. 3;
- Fig. 5 represents a detail of the first preferred embodiment of the plant of Fig. 3;
- Fig. 6 represents the plant of the invention, in side view, according to the aforesaid second preferred embodiment.

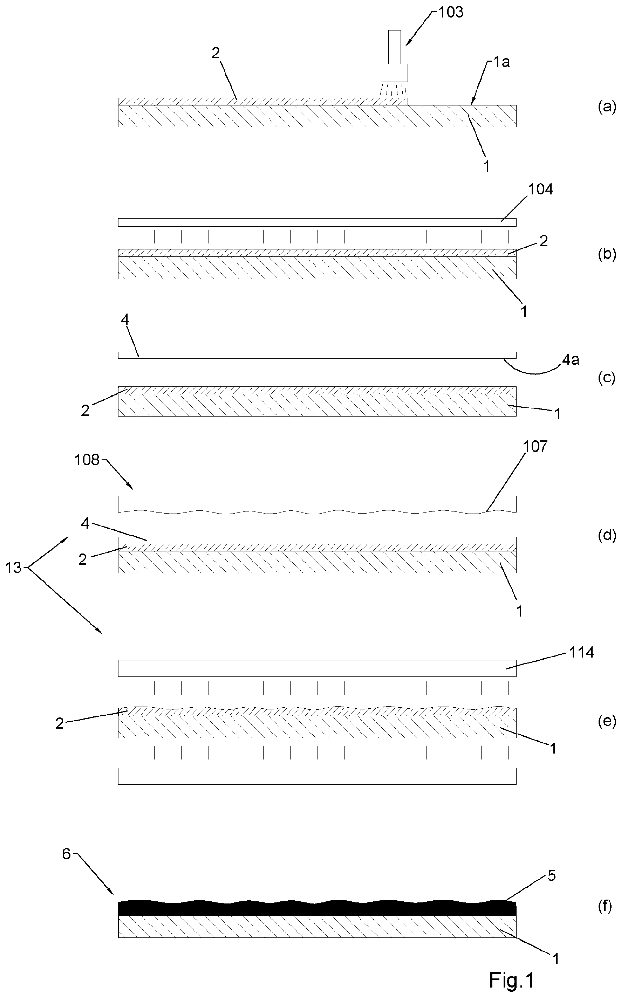

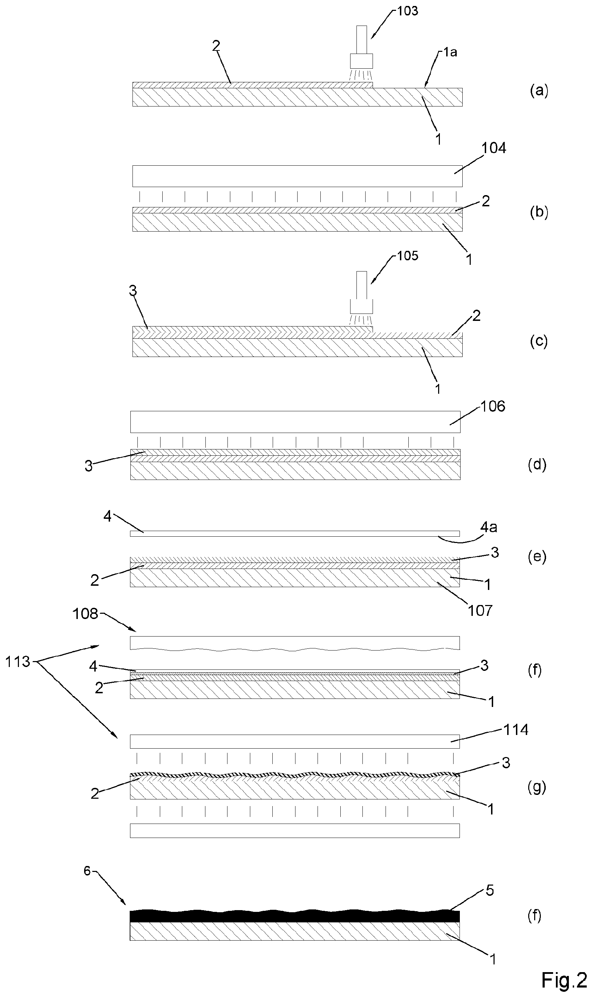

The method of the invention for producing a multilayer laminar product, subsequently indicated with **6,** particularly suitable for ennobling leathers, envisages providing a laminar support, indicated in Fig. 1 and Fig. 2 with **1.** Preferably, the laminar support **1** is a leather, but the method of the invention can also be applied to other laminar supports, in particular to fabrics, synthetic or otherwise.

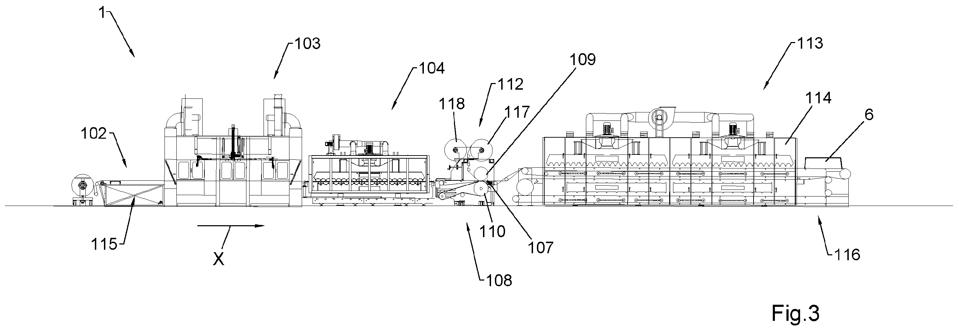

Preferably but not necessarily, the laminar support **1** is advanced in a plant **100,** represented according to the preferred embodiment in Fig. 3, according to an advancement direction **X** at a predetermined advancement speed by a first feed device **102.** Preferably, the aforesaid first feed device **102** comprises a flexible element closed in a loop around a series of cylinders, on which the laminar support **1** is rested and which is advanced according to the aforesaid advancement direction **X.**

As for the advancement speed, preferably but not necessarily it is in the range between 5 and 20 metres per minute, even more preferably between 8 and 14 metres per minute.

As can be seen in Fig. 1(a), according to a first preferred embodiment of the method of the invention, a first face **1a** of the laminar support **1** is covered with a first covering layer **2** in a polymer resin, preferably but not necessarily comprising polyurethane.

Such polymer resin could alternatively be an epoxy or acrylic polymer resin or mixtures of acrylic, polyurethane or epoxy resins.

In addition, such resins could comprise additives in aqueous dispersion.

Still preferably, such polymer resin comprises pigments.

The first covering layer **2** of polymer resin is deposited on the laminar support **1,** preferably by spraying or by spreading with a blade or a cylinder on the first face **1a,** by means of a first applicator assembly **103** belonging to the plant **100.** The first applicator assembly **103** may comprise a series of spray nozzles arranged in a circle, which are rotated around the axis of the circle so as to intersect in succession the trajectory of the laminar support **1,** or which are moved with reciprocal motion and transversely to the trajectory of the laminar support **1.** Alternatively or in combination with the aforesaid spray nozzles, the first applicator assembly **103** may comprise a doctor blade for spreading the polymer resin on the first face **1a.**

Preferably, the amount of such resin of the first covering layer **2** is between 22 and 215 grams per square meter (2 and 20 grams per square foot), more preferably this amount is between 75 and 129 grams per square meter (7 and 12 grams per square foot).

It should be noted that the unit of measurement grams per square foot was deliberately used in describing the amount of resin spread on the laminar support, even if this unit of measurement does not belong to the international system of units of measurement. Such choice is due to the fact that, for all intents and purposes, the operators in the sector use this unit of measurement to define the aforesaid amount of resin. In any case, as known, it is wished to remind that a square foot corresponds to 929.03 cm². Therefore, if necessary, this amount of resin could also be expressed with the unit of measurement grams per cm², making the appropriate transformation of the above indicated values in grams per square foot into the respective values expressed in grams per cm².

As seen in Fig. 1(b), the method of the invention, following the operation of covering the first face **1a** of the laminar support **1** with said first covering layer **2** in a polymer resin, envisages consolidating the latter, for example causing a slight polymerization, so as to give it a more compact consistency, similar to a gel, so as to obtain a consolidated covering layer. Preferably, partial consolidation takes place by heating with a first heater **104,** for example a battery of infrared lamps or a ventilated dryer with diathermic oil, steam or gas heating.

Preferably, this step of partial consolidation of the first covering layer **2** by heating takes place at a temperature between 35°C and 80°C, even more preferably between 45°C and 70°C.

In addition, this step of partial consolidation envisages reducing the weight per square foot of the first covering layer **2** downstream of the first heater **104** by a percentage between 35% and 55% with respect to the weight per square foot of said first covering layer **2** upstream of the first heater **104.**

In order to verify this weight reduction value, it is necessary to:
- weigh a square foot of the aforesaid laminar support **1** before applying the first covering layer **2,** so as to define a tare;
- weigh upstream of the first heater **104** said square foot of the same laminar support **1** on which the first covering layer **2** is applied by means of the aforesaid first applicator assembly **103** and to subtract, from the latter value, the tare value;
- weigh downstream of the first heater **104,** or after the partial consolidation step, the square foot of the same laminar support **1** on which the first covering layer **2** is applied and to subtract, from the latter value, the tare value;
- relate these last two weight values, without the tare, to verify the aforesaid weight reduction as a percentage of the second weight value with respect to the first.

According to the preferred embodiment of the invention, the method envisages providing above the first covering layer **2** a laminar element **4** provided with a first face **4a,** as indicated in Fig. 1(c), so that said laminar element **4** is interposed between said first covering layer **2** and an embossed surface **107,** during the subsequent pressing step of the method of the invention.

With regard to the laminar element **4,** it must have sufficient yieldability to be able to transfer the embossing from the embossed surface **107** to the first covering layer **2.** The property just mentioned is obtainable by choosing a material resistant enough to allow a very reduced thickness for the laminar element **4** and, at the same time, with a mechanical and thermal resistance compatible with the use in the aforesaid process.

It has been found that materials particularly suitable for use as a laminar element are polyethylene, nylon, polyesrer, which have a relatively low cost and adequate mechanical and thermal resistance even with very reduced thicknesses, for example between 5 microns and 50 microns, even more preferably between 8 microns and 30 microns, specifically with a thickness equal to 15 microns. It is also evident that, in embodiment variants of the invention, the laminar element **4** can be made of any other material, provided that it has the properties mentioned above.

It is clear that, since the embossed surface **107** is distinct from the laminar element **4,** the latter does not have the same width constraints as the embossed papers available on the market.

In particular, since the embossing is imprinted on the first covering layer **2** by the embossed surface **107,** while the laminar element **4** is used only and exclusively to avoid contact between the embossed surface **107** and the polymer resin, it is very advantageous to use a laminar element **4** with a smooth surface.

In fact, a smooth laminar element can be selected from a wide range of commercially available materials, including polyethylene or smooth nylon. This also allows choosing the laminar element **4,** so as to minimize costs and/or maximize the quality of the multilayer product.

Furthermore, given the nature of the material of the laminar element **4** used in the ennobling process subject-matter of the invention, given the thickness of the same laminar element **4** and the fact that its surface is a smooth surface, it is not necessary to apply on this surface, adapted to be placed in contact with the first covering layer **2** during the embossing operation, a polyurethane protective film, as instead required by the prior art. Therefore, according to the invention, said laminar element **4** is interposed between the first covering layer and the embossed surface **107,** free of any type of protective film. In other words, said surface of the laminar element **4** does not undergo any covering treatment with said protective film, before the embossing operation is carried out.

Consequently, at the end of the ennobling process, cleaning said laminar element **4** from the residues remaining thereon of the aforesaid protective film is thus no longer necessary. Advantageously, therefore, thanks to the characteristics of the laminar element **4,** used according to the invention, the proposed ennobling process, on the one hand allows to obtain an optimal ennobling result, and on the other hand allows to reduce the times for executing this process and the costs due to the use of embossed paper, as described above for the prior art.

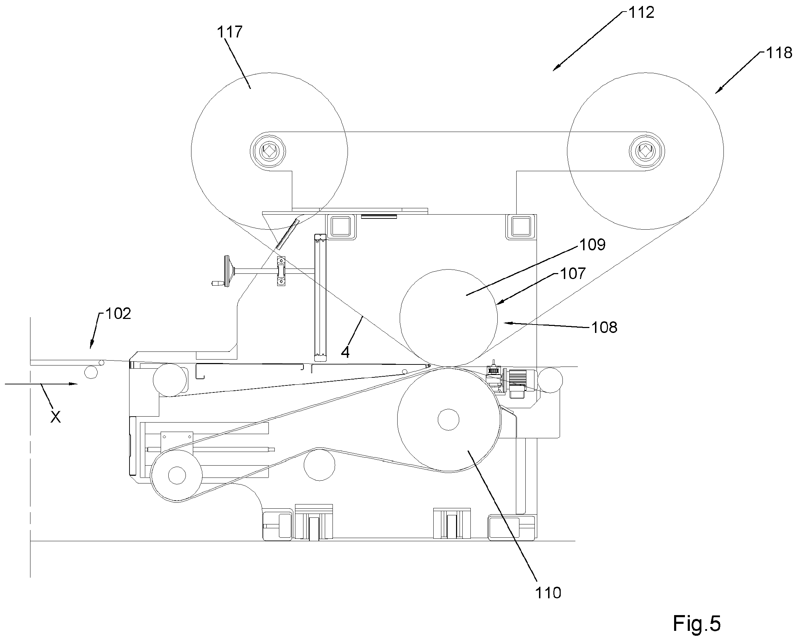

Preferably, the plant **100,** configured to allow the execution of such a preferred embodiment of the method of the invention, provides that the laminar element **4** is provided in the form of a tape and is advanced in the advancement direction **X** at a speed corresponding to the aforesaid advancement speed by a second feed device **112,** visible in particular in the detail of Fig. 5.

Preferably, the second feed device **112** comprises a series of rollers that hold the laminar element **4** in tension and guide it according to a predefined trajectory, so as to bring it into contact with the laminar support **1.**

Even more specifically, said feed device **112** comprises a first reel **117** from which said tape of laminar element **4** is unwound and a second reel **118** on which said tape is wound after use, said first and second reels **117** and **118** being defined on the plant **100** so that the tape constituting the laminar element **4** is interposed between the laminar support **1** and the embossed surface **107,** when the thrust assembly **108** exerts the aforesaid thrust of the same embossed surface **107** against the second covering layer **3.**

As already mentioned, subsequently, the embossed surface **107,** arranged downstream of the first heater **104** according to the advancement direction **X,** is pushed against the first covering layer **2,** with interposition of the laminar element **4,** in a thrust assembly **108,** as schematically represented in Fig. 1(d). During the aforesaid thrust operation, the pattern of the embossed surface **107** is imprinted on the first covering layer **2,** as schematically represented in Fig. 1(e). Preferably, the aforesaid thrust is performed with a pressure between 20 and 100 kg/cm² and, even more preferably, between 50 and 70 kg/cm². Advantageously, the aforesaid pressure is sufficiently limited so as not to substantially alter the properties of the laminar support **1,** in particular its softness, which is very important in the event that the laminar support is leather.

Preferably and as can again be seen in Fig. 3, the embossed surface **107** belongs to an embossing cylinder **109,** mounted rotatably around its axis. Advantageously, the aforesaid embossing cylinder **109** can be kept constantly resting on the laminar support **1** allowing a continuous process to be carried out. It is also evident that, in embodiment variants of the invention not represented in the figures, the embossed surface **107** may belong to a device other than the aforesaid embossing cylinder, such as for example a die, or whatever.

Preferably, the embossing cylinder **109** is made of steel and has a chromed surface, which gives it high chemical resistance.

Even more in detail, this embossed surface **107** of the embossing cylinder **109** has a roughness between 3 microns and 400 microns.

Still preferably, there is a support surface opposed to the embossed surface **107** which, during the thrust, supports the laminar support **1** on the face opposite the first face **1a.** Preferably, the support surface belongs to a corresponding support cylinder **110,** mounted rotatably around its axis.

Preferably, the embossing cylinder **109** and the support cylinder **110** are arranged at a reciprocal distance less than the overall thickness of the laminar support **1** and the first covering layer **2,** so that the aforesaid elements are compressed as a result of their passage between the two cylinders **109, 110.**

Still preferably, there is provided an adjustment device for modifying the aforesaid distance depending on the thickness of the laminar support **1** employed and the pressure required for thrust.

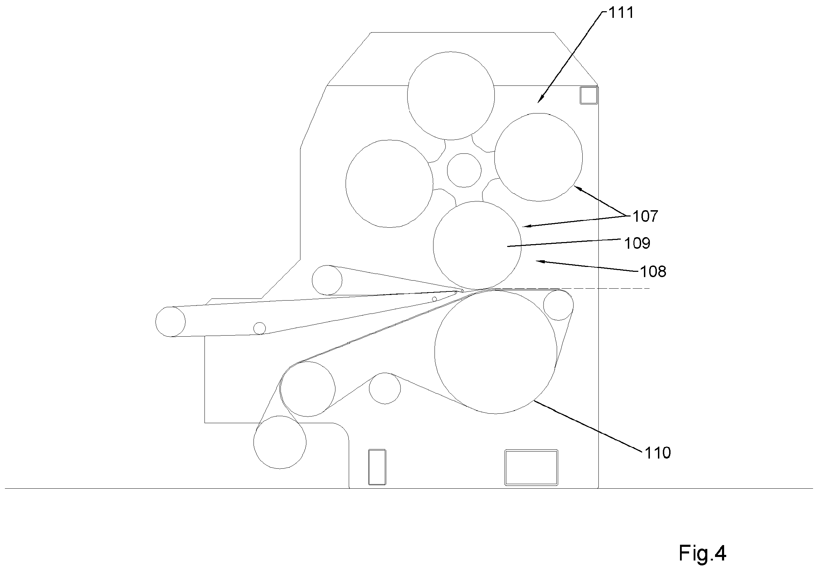

According to an embodiment variant of the invention, a plurality of interchangeable embossed surfaces **107,** in turn provided with different surface patterns, could be provided. A possible embodiment to obtain the feature just described, represented in Fig. 4, envisages arranging a plurality of embossing cylinders **109,** each with a corresponding embossed surface **107,** mounted on a revolver device **111** so that they can be easily and quickly changed over if necessary. It is evident that, in embodiment variants, the number of embossing cylinders may be different from that represented in Fig. 4.

As can be seen in Figs. 1(d) and 1(e), following or concurrently with the thrust of the embossed surface **107** against the laminar support **1,** a treatment assembly **113** causes the polymerization of the first covering layer **2,** so as to obtain a stabilized covering layer **5,** i.e. substantially solidified, as indicated in Fig. 1(f). Preferably, the polymerization takes place by heating, still preferably carried out at a temperature between 60°C and 190°C, still more preferably between 70°C and 120°C. Advantageously, the temperature values just indicated are low enough not to significantly alter the structure of the laminar supports **1** that are commonly used in the process, in particular the leathers, which therefore retain their softness.

Still preferably, the aforesaid heating starts in contact with the embossed surface **107,** to which a heating device is associated that can comprise, for example, an interspace in contact with the embossed surface **107** and a circulation device that conveys a heat transfer fluid into the interspace.

Preferably, the polymerization is completed in a polymerization furnace **114** arranged downstream of the thrust assembly **108** according to the advancement direction **X,** as can be seen both in Fig. 1(f), as regards the method, and in Fig. 3 as regards the plant **100.**

Even more preferably, such a polymerization furnace **114** is a steam furnace, the operating temperature of which is set, according to the preferred embodiment of the invention, between 65°C and 90°C, even more preferably between 75°C and 80°C.

A second preferred embodiment of the method of the invention, the steps of which are schematically represented in Fig. 2, could provide, with respect to the method according to the first preferred embodiment, that following the aforesaid step of consolidating the first covering layer **2** and before the step of providing the laminar element **4,** there is a further step of covering the first face **1a** of the laminar support **1,** as can be seen in Fig. 2(c), above the aforesaid first covering layer **2** that has partially consolidated, with a second covering layer **3** in non-stick material. Preferably but not necessarily, said second covering layer **3** in non-stick material is composed of a liquid or viscous substance comprising one or more polymers selected from polyurethane, silicone, ETFE, FEP, PTFE and PEEK polymers.

Alternatively, such a non-stick material could be composed of water-based or solvent-based microcellulose.

It is also evident that, in embodiment variants of the invention, any other material can be used as the second covering layer **3,** provided it has the non-stick properties.

Advantageously, the fact of applying and consolidating, at least partially, said second covering layer **3** of non-stick material above the first covering layer **2** of polymer resin prevents the same resin from coming into direct contact with the embossed surface **107,** risking deteriorating, or at least contaminating the latter with solidified resin residues, and at the same time avoids the need to use a paper, possibly embossed, covered with a protective layer, as in the case of the known methods.

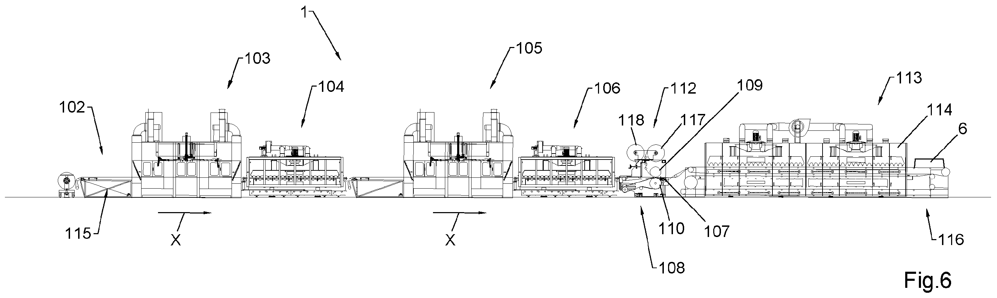

Also with regard to the second covering layer **3** in non-stick material, it is deposited on the laminar support **1,** preferably by spraying or by spreading with a blade or a cylinder on the first face **1a,** as schematically represented in Fig. 2(c), by means of a second applicator assembly **105** belonging to the plant **200** presented in Fig. 6. The second applicator assembly **105** may comprise a series of spray nozzles arranged in a circle, which are rotated around the axis of the circle so as to intersect in succession the trajectory of the laminar support **1,** or which are moved with reciprocal motion and transversely to the trajectory of the laminar support **1.** Alternatively or in combination with the aforesaid spray nozzles, the second applicator assembly **105** may comprise a doctor blade for spreading the polymer resin on the first face **1a,** above the first covering layer **2.**

Preferably, the amount of the second covering layer **3** is between 1 and 6 grams per square foot and, even more preferably, is substantially equal to 3 grams per square foot.

Subsequent to said second covering, as can be seen in Fig. 2(d), the method of the invention also envisages consolidating the second covering layer **3,** for example causing a slight polymerization thereof, to give it a more compact consistency, similar to a gel, so as to obtain a consolidated covering layer. Preferably, also in this case, consolidation takes place by heating with a second heater **106,** for example a battery of infrared lamps or a ventilated dryer with diathermic oil, steam or gas heating.

This consolidation step also envisages reducing the weight per square foot of the second covering layer **3** downstream of the second heater **106** by a percentage between 35% and 55% with respect to the weight per square foot of said second covering layer **3** upstream of the second heater **106.**

Advantageously, since, above the first covering layer **2,** the aforesaid second covering layer **3** in non-stick material is arranged, the aforesaid first face **4a,** when placed in contact with said second covering layer **3** in non-stick material, does not create chemical bonds with the latter, that is, does not irreversibly adhere to it, so that the laminar element **4** can be easily separated from the second covering layer **3** in non-stick material even after the latter has been polymerized, without damaging the first covering layer **2** itself.

An embodiment variant of the method of the invention with respect to the second embodiment discussed so far, could envisage performing all the steps described above, in particular in sequence the steps of covering the laminar support **1** with the first covering layer **2,** the step of partial consolidation of the latter, the further step of covering with the second covering layer **3** and the step of partial consolidation of the latter, omitting however the step of providing the protective laminar element **4,** above the aforesaid second covering layer **3.** This results in that the embossed surface **107** is adapted to come into direct contact with the second covering layer **3** during the pressing step.

Advantageously, the fact that the embossed surface **107** is defined directly on the pressing cylinder **109** and that between this embossed surface **107** and the first and the second covering layer **2** and **3** there is therefore no need to interpose any other element, such as the embossed paper, it avoids having the width constraints of the latter.

In general, therefore, it is understood that the method of the invention, both in the variant of Fig. 1, and in the plant **100** of Fig. 3, in which the interposition of the laminar element **4** is provided, both in the variant of Fig. 2, and in the plant **200** of Fig. 6, in which the direct contact of the embossed surface **107** with the second covering layer **3** in non-stick material is provided, achieves the purpose of allowing the processing of laminar supports **1** of any width.

Furthermore, the fact of not using any material to be interposed between the embossed surface and the second covering layer **3** or, at least, the possibility of using a low-cost material for the laminar element **4** entail the further advantage of making the application of the method of the invention and the relative plant configured to implement the aforesaid method economically advantageous.

In particular, the use of the aforesaid low-cost smooth laminar element **4,** compared to the use of paper with an embossed surface, has the advantage of being able to eliminate the same laminar element **4** after use, without having to recover it for later use. This allows the laminar element **4** to be sized to withstand a single processing step and, therefore, allows its thickness to be minimized so as to further limit its cost and increase the quality of the processing.

The fact of not needing to reuse the laminar element **4** also avoids cleaning the latter, limiting the cost and overall size of the plant compared to known type plants.

Operationally, according to the first preferred embodiment of the method of the invention, the laminar support **1** is spread on the flexible element of the first feed device **102** at a loading zone **115,** indicated in Fig. 3.

The first feed device **102** thus advances the laminar support **1** according to the advancement direction **X** and at a predefined advancement speed towards the first applicator assembly **103,** where it is covered with the first covering layer **2.** The laminar support **1** thus covered is heated by the first heater **104** in order to consolidate the covering layer **2.**

After this first heating operation, the laminar element **4** is arranged above the first covering layer **2,** so that the laminar support **1** covered by the same first covering layer **2** is conveyed between the embossing cylinder **109** and the support cylinder **110,** with interposition of the aforesaid laminar element **4.** While it is conveyed, the embossed surface **107** is brought into contact with the first covering layer **2,** with interposition of the laminar element **4,** so as to imprint the embossing on the same first covering layer **2.**

The contact angle between the laminar support **1** and the embossing cylinder **109** may vary depending on the diameter of the embossing cylinder **109,** the production speed, the thickness of the first covering layer **2,** so as to consolidate the embossing of the aforesaid first layer.

The contact with the surface of the embossing cylinder **109** also allows this suitably heated surface to be used to start the polymerization of the first covering layer **2.**

Preferably, the contact angle between the laminar support **1** and the embossing cylinder **109** is adjustable as required by means of a special adjustment device which, for example, acts by changing the position of the support cylinder **110** according to the advancement direction **X.** The variation of the aforesaid contact angle entails the variation of the contact time between the laminar support **1** and the embossing cylinder **109.**

Preferably, the polymerization is completed in the polymerization furnace **114** arranged downstream of the thrust assembly **108.**

Finally, at the exit from the aforesaid polymerization furnace **114,** it is possible to unload the multilayer laminar product **6** from an unloading zone **116.**

With regard, however, to the second preferred embodiment of the invention, operatively, the laminar support **1** is spread on the flexible element of the first feed device **102** at a loading zone **115,** indicated in Fig. 6.

The first feed device **102** thus advances the laminar support **1** according to the advancement direction **X** and at a predefined advancement speed towards the first applicator assembly **103,** where it is covered with the first covering layer **2.** The laminar support **1** thus covered is heated by the first heater **104** in order to consolidate the covering layer **2.**

Subsequently, the first feed device **102** advances the laminar support 1, whose first surface **1a** is covered with the aforesaid first covering layer **2,** according to the advancement direction **X** towards the second applicator assembly **105,** where it is covered with the second covering layer **3,** consisting of a non-stick material.

The laminar support **1** thus covered with the second covering layer **3** is further heated by the second heater **106,** in order to consolidate the second covering layer **3.**

After this second heating operation, the laminar element **4** is arranged above the second covering layer **3,** so that the laminar support **1** covered by the first covering layer **2** and by the second covering layer **3** is conveyed between the embossing cylinder **109** and the support cylinder **110,** with interposition of the aforesaid laminar element **4.** While it is conveyed, the embossed surface **107** is brought into contact with the second covering layer **3,** with interposition of the laminar element **4,** so as to imprint the embossing both on the latter and on the first covering layer **2** below.

The contact angle between the laminar support **1** and the embossing cylinder **109** can vary depending on the diameter of the embossing cylinder **109,** the production speed, the thickness of the two covering layers **2** and **3,** so as to consolidate the embossing of the aforesaid two layers.

The contact with the surface of the embossing cylinder **109** also makes it possible to exploit this suitably heated surface to start the polymerization of the same two covering layers **2** and **3.**

Preferably, the contact angle between the laminar support **1** and the embossing cylinder **109** is adjustable as required by means of a special adjustment device which, for example, acts by changing the position of the support cylinder **110** according to the advancement direction **X.** The variation of the aforesaid contact angle entails the variation of the contact time between the laminar support **1** and the embossing cylinder **109.**

Preferably, the polymerization is completed in the polymerization furnace **114** arranged downstream of the thrust assembly **108.**

Preferably, during the polymerization the second covering layer **3** adheres to the first covering layer **2** giving rise to a stabilized layer **5** in a single body, indicated in Fig. 2(h).

Finally, at the exit from the aforesaid polymerization furnace **114,** it is possible to unload the multilayer laminar product **6** from an unloading zone **116.**

From what has been said so far, it is understood that the method and the plant described above achieve all the intended objects.

In particular, the fact of using an embossed surface directly in contact with the layer to be embossed or, at least, distinct from a possible laminar element, allows the entire process to be disconnected from the embossed papers available on the market, which constrain the maximum width of the processable laminar supports.

Consequently, it is possible to realize a plant capable of processing laminar supports with widths greater than those permitted by the known technique.

Furthermore, the aim of proposing a method for producing a multilayer laminar product, the implementation of which is less expensive than similar methods belonging to the prior art, is also achieved.

## Claims

1. Method for producing a multilayer laminar product (6), comprising the following operations:
- providing a laminar support (1), said laminar support (1) being a leather or a fabric;
- covering a first face (1a) of said laminar support (1) with a first covering layer (2) in a polymer resin, said covering operation providing for covering said first face (1a) with an amount of said first covering layer (2) between 22 and 215 grams per square meter (2 and 20 grams per square foot), more preferably said amount being between 75 and 129 grams per square meter (7 and 12 grams per square foot);
- consolidating, at least partially, said first covering layer (2), said consolidation step providing for reducing the weight per square foot of said first covering layer (2) downstream of said consolidation by a percentage between 35% and 55% with respect to the weight per square foot of said first covering layer (2) upstream of said consolidation;
- providing a laminar element (4) above said first covering layer (2), said laminar element (4) being of a material chosen from polyethylene, nylon or polyester with a thickness between 5 microns and 50 microns, even more preferably between 8 microns and 30 microns, specifically with a thickness equal to 15 microns, said laminar element (4) having a smooth surface,
- pushing an embossed surface (107) against said first covering layer (2) with interposition of said laminar element (4) to imprint on said first covering layer (2) the pattern of said embossed surface (107);
- after imprinting said pattern, causing the polymerization of said first covering layer (2) to obtain a stabilized covering layer (5),
**characterized in that** said laminar element (4) is free of any protective film at its surface adapted to be facing said first covering layer.

2. Method according to claim 1, **characterized by** providing, after said consolidation operation of said first covering layer (2) and before said provision of said laminar element (4), for the execution of the following operations:
- covering said first face (1a) of said laminar support (1), above said first covering layer (2), at least partially consolidated, with a second covering layer (3) in non-stick material;
- consolidating, at least partially, said second covering layer (3) in non-stick material before pushing said embossed surface (107) against said second covering layer (3).

3. Method according to claim 2, **characterized in that** said second covering layer (3) in non-stick material is composed of a liquid or viscous substance comprising one or more polymers selected from polyurethane, silicone, ETFE, FEP, PTFE and PEEK polymers.

4. Method according to any one of claims 2 or 3, **characterized in that** said second covering operation provides for covering said first face (1a) with an amount of said second covering layer (2) between 1 and 6 grams per square foot and, even more preferably, said amount of said second covering layer (2) is substantially equal to 3 grams per square foot.

5. Method according to any one of the preceding claims, **characterized in that** said embossed surface (107) belongs to an embossing cylinder (109).

6. Method according to claim 5, **characterized in that** said embossed surface (107) of said embossing cylinder (109) has a roughness between 3 microns and 400 microns.

7. Method according to any one of the preceding claims, **characterized in that** during said step of pushing said embossed surface (107) against said first covering layer (2), a heating step preferably carried out at a temperature between 60°C and 190°C, even more preferably between 70°C and 120°C, is simultaneously performed in order to start the polymerization of said first covering layer (2).

8. Method according to any one of the preceding claims, **characterized in that** said step of polymerising after said imprinting of said pattern envisages heating said first covering layer (2) by means of a steam furnace, whose operating temperature is set between 65°C and 90°C, even more preferably between 75°C and 80°C.

9. Method according to any one of the preceding claims, **characterized in that** said laminar support (1) is advanced in a plant (100) according to an advancement direction X at a predetermined advancement speed in the range between 5 and 20 metres per minute, even more preferably between 8 and 14 metres per minute.

10. Method according to any one of the preceding claims, **characterized in that** said partial consolidation step takes place by heating said first covering layer (2) at a temperature between 35°C and 80°C, even more preferably between 45°C and 70°C.

11. Method according to any one of the preceding claims, **characterized in that** said pushing step is performed with a pressure between 20 and 100 kg/cm² and, even more preferably, between 50 and 70 kg/cm².

12. Plant (100, 200) for producing a multilayer laminar product (6), comprising in sequence, according to an advancement direction (X):
- a first feed device (102) for advancing a laminar support (1) at a predetermined advancement speed;
- a first applicator assembly (103) for covering a first face (1a) of said laminar support (1) with a first covering layer (2) in a polymer resin, said first applicator assembly (103) being configured for covering said first face (1a) with an amount of said first covering layer (2) between 22 and 215 grams per square meter (2 and 20 grams per square foot), more preferably said amount being between 75 and 129 grams per square meter (7 and 12 grams per square foot);
- a first heater (104) configured to consolidate, at least partially, said first covering layer (2), said first heater (104) being configured for reducing the weight per square foot of said first covering layer (2) downstream of said consolidation by a percentage between 35% and 55% with respect to the weight per square foot of said first covering layer (2) upstream of said consolidation;
- a laminar element (4) being of a material chosen from polyethylene, nylon or polyester with a thickness between 5 microns and 50 microns, even more preferably between 8 microns and 30 microns, specifically with a thickness equal to 15 microns, said laminar element (4) having a smooth surface;
- a second feed device (112) for advancing said laminar element (4) at a speed corresponding to said advancement speed;
- a thrust assembly (108) comprising an embossed surface (107) arranged downstream of said first heater (104), configured to push said embossed surface (107) against said first covering layer (2), with interposition of said laminar element (4), so as to imprint on said first covering layer (2) the pattern of said embossed surface (107);
- a treatment assembly (113) arranged downstream of said thrust assembly (108), configured to cause the polymerization of said first covering layer (2),
**characterized in that** said laminar element (4) is free of any protective film at its surface adapted to be facing said first covering layer (2).

13. Plant (200) for producing a multilayer laminar product (6), according to claim 12, **characterized in that** it comprises:
- downstream of said first heater (104), a second applicator assembly (105) arranged downstream of said first heater (104), to cover said first face (1a) of said laminar support (1), above said first covering layer (2), at least partially consolidated, with a second covering layer (3) in non-stick material;
- a second heater (106) configured to consolidate, at least partially, said second covering layer (3).

14. Plant (100, 200) according to any one of claims 12 or 13, **characterized in that** said laminar element (4) is provided in the form of a tape, said second feed device (112) comprising a first reel (117) from which said tape of said laminar element (4) is unwound and a second reel (118) on which said tape of said laminar element (4) is wound, said first reel (117) and said second reel (118) being arranged in said plant (100, 200) so that said tape of said laminar element (4) is interposed between said laminar support (1) and said embossed surface (107) when said thrust assembly (108) exerts said thrust of said embossed surface (107) against said second covering layer (3) applied on said laminar support (1).

15. Plant (100, 200) according to any one of claims 12 to 14, **characterized in that** said embossed surface (107) belongs to an embossing cylinder (109).

## Patentansprüche

1. Verfahren zur Herstellung eines mehrschichtigen laminaren Produkts (6), das die folgenden Vorgänge umfasst:
- Bereitstellen eines laminaren Trägers (1), wobei der laminare Träger (1) ein Leder oder ein Stoff ist;
- Bedecken einer ersten Fläche (1a) des laminaren Trägers (1) mit einer ersten Abdeckschicht (2) aus einem Polymerharz, wobei der Abdeckvorgang das Bedecken der ersten Fläche (1a) mit einer Menge der ersten Abdeckschicht (2) zwischen 22 und 215 Gramm pro Quadratmeter (2 und 20 Gramm pro Quadratfuß) vorsieht, wobei die Menge bevorzugter zwischen 75 und 129 Gramm pro Quadratmeter (7 und 12 Gramm pro Quadratfuß) liegt;
- zumindest teilweises Verfestigen der ersten Abdeckschicht (2), wobei der Verfestigungsschritt vorsieht, dass das Gewicht pro Quadratfuß der ersten Abdeckschicht (2) stromabwärts der Verfestigung um einen Prozentsatz zwischen 35% und 55% in Bezug auf das Gewicht pro Quadratfuß der ersten Abdeckschicht (2) stromaufwärts der Verfestigung reduziert wird;
- Bereitstellen eines laminaren Elements (4) oberhalb der ersten Abdeckschicht (2), wobei das laminare Element (4) aus einem Material ausgewählt aus Polyethylen, Nylon oder Polyester mit einer Dicke zwischen 5 Mikrometern und 50 Mikrometern, noch bevorzugter zwischen 8 Mikrometern und 30 Mikrometern, insbesondere mit einer Dicke gleich 15 Mikrometern, besteht, wobei das laminare Element (4) eine glatte Oberfläche aufweist;
- Drücken einer geprägten Oberfläche (107) gegen die erste Abdeckschicht (2) unter Zwischenlage des laminaren Elements (4), um auf die erste Abdeckschicht (2) das Muster der geprägten Oberfläche (107) aufzudrucken;
- nach dem Aufdrucken des Musters, Veranlassen der Polymerisation der ersten Abdeckschicht (2), um eine stabilisierte Abdeckschicht (5) zu erhalten,
**dadurch gekennzeichnet, dass** das laminare Element (4) an seiner Oberfläche, die der ersten Abdeckschicht zugewandt sein kann, frei von jeglichem Schutzfilm ist.

2. Verfahren nach Anspruch 1, **dadurch gekennzeichnet, dass** nach dem Verfestigungsvorgang der ersten Abdeckschicht (2) und vor der Bereitstellung des laminaren Elements (4) die Ausführung der folgenden Vorgänge vorgesehen wird:
- Bedecken der ersten Fläche (1a) des laminaren Trägers (1) oberhalb der ersten Abdeckschicht (2), die zumindest teilweise verfestigt ist, mit einer zweiten Abdeckschicht (3) aus Antihaftmaterial,
- Verfestigen, zumindest teilweise, der zweiten Abdeckschicht (3) aus einem Antihaftmaterial, bevor die geprägte Oberfläche (107) gegen die zweite Abdeckschicht (3) gedrückt wird.

3. Verfahren nach Anspruch 2, **dadurch gekennzeichnet, dass** die zweite Abdeckschicht (3) aus Antihaftmaterial aus einer flüssigen oder viskosen Substanz besteht, die ein oder mehrere Polymere umfasst, die aus Polyurethan-, Silikon-, ETFE-, FEP-, PTFE- und PEEK-Polymeren ausgewählt sind.

4. Verfahren nach einem der Ansprüche 2 oder 3, **dadurch gekennzeichnet, dass** der zweite Abdeckvorgang das Bedecken der ersten Fläche (1a) mit einer Menge der zweiten Abdeckschicht (2) zwischen 1 und 6 Gramm pro Quadratfuß vorsieht und, noch bevorzugter, die Menge der zweiten Abdeckschicht (2) im Wesentlichen gleich 3 Gramm pro Quadratfuß ist.

5. Verfahren nach einem der vorhergehenden Ansprüche, **dadurch gekennzeichnet, dass** die geprägte Oberfläche (107) zu einem Prägezylinder (109) gehört.

6. Verfahren nach Anspruch 5, **dadurch gekennzeichnet, dass** die geprägte Oberfläche (107) des Prägezylinders (109) eine Rauhigkeit zwischen 3 Mikrometer und 400 Mikrometer aufweist.

7. Verfahren nach einem der vorhergehenden Ansprüche, **dadurch gekennzeichnet, dass** während des Schritts des Drückens der geprägten Oberfläche (107) gegen die erste Abdeckschicht (2) gleichzeitig ein Erhitzungsschritt durchgeführt wird, der vorzugsweise bei einer Temperatur zwischen 60 °C und 190 °C, noch bevorzugter zwischen 70 °C und 120 °C, durchgeführt wird, um die Polymerisation der ersten Abdeckschicht (2) zu starten.

8. Verfahren nach einem der vorhergehenden Ansprüche, **dadurch gekennzeichnet, dass** der Schritt des Polymerisierens nach dem Aufdrucken des Musters das Erhitzen der ersten Abdeckschicht (2) mittels eines Dampfofens vorsieht, dessen Betriebstemperatur zwischen 65 °C und 90 °C, noch bevorzugter zwischen 75 °C und 80 °C eingestellt ist.

9. Verfahren nach einem der vorhergehenden Ansprüche, **dadurch gekennzeichnet, dass** der laminare Träger (1) in einer Anlage (100) gemäß einer Vorschubrichtung X mit einer vorbestimmten Vorschubgeschwindigkeit im Bereich zwischen 5 und 20 Metern pro Minute, noch bevorzugter zwischen 8 und 14 Metern pro Minute, vorgeschoben wird.

10. Verfahren nach einem der vorhergehenden Ansprüche, **dadurch gekennzeichnet, dass** der Schritt des teilweisen Verfestigens durch Erhitzen der ersten Abdeckschicht (2) auf eine Temperatur zwischen 35 °C und 80 °C, noch bevorzugter zwischen 45 °C und 70 °C, erfolgt.

11. Verfahren nach einem der vorhergehenden Ansprüche, **dadurch gekennzeichnet, dass** der Druckschritt mit einem Druck zwischen 20 und 100 kg/cm² und, noch bevorzugter, zwischen 50 und 70 kg/cm² durchgeführt wird.

12. Anlage (100, 200) zur Herstellung eines mehrschichtigen laminaren Produkts (6), umfassend nacheinander, gemäß einer Vorschubrichtung (X):
- eine erste Zuführvorrichtung (102) zum Vorschieben eines laminaren Trägers (1) mit einer vorbestimmten Vorschubgeschwindigkeit;
- eine erste Auftragsbaugruppe (103) zum Bedecken einer ersten Fläche (1a) des laminaren Trägers (1) mit einer ersten Abdeckschicht (2) aus einem Polymerharz, wobei die erste Auftragsbaugruppe (103) zum Bedecken der ersten Fläche (1a) mit einer Menge der ersten Abdeckschicht (2) zwischen 22 und 215 Gramm pro Quadratmeter (2 und 20 Gramm pro Quadratfuß) konfiguriert ist, wobei die Menge bevorzugter zwischen 75 und 129 Gramm pro Quadratmeter (7 und 12 Gramm pro Quadratfuß) liegt;
- eine erste Heizvorrichtung (104), die so konfiguriert ist, dass sie die erste Abdeckschicht (2) zumindest teilweise verfestigt, wobei die erste Heizvorrichtung (104) so konfiguriert ist, dass sie das Gewicht pro Quadratfuß der ersten Abdeckschicht (2) stromabwärts der Verfestigung um einen Prozentsatz zwischen 35% und 55% in Bezug auf das Gewicht pro Quadratfuß der ersten Abdeckschicht (2) stromaufwärts der Verfestigung reduziert;
- wobei ein laminares Element (4) aus einem Material ausgewählt aus Polyethylen, Nylon oder Polyester mit einer Dicke zwischen 5 Mikrometern und 50 Mikrometern, noch bevorzugter zwischen 8 Mikrometern und 30 Mikrometern, insbesondere mit einer Dicke gleich 15 Mikrometern, besteht, wobei das laminare Element (4) eine glatte Oberfläche aufweist;
- eine zweite Zuführvorrichtung (112) zum Vorschieben des laminaren Elements (4) mit einer Geschwindigkeit, die der Vorschubgeschwindigkeit entspricht;
- eine Schubbaugruppe (108), die eine geprägte Oberfläche (107) umfasst, die stromabwärts der ersten Heizvorrichtung (104) angeordnet ist und konfiguriert ist, um die geprägte Oberfläche (107) unter Zwischenlage des laminaren Elements (4) gegen die erste Abdeckschicht (2) zu drücken, um auf die erste Abdeckschicht (2) das Muster der geprägten Oberfläche (107) aufzudrucken;
- eine Behandlungsbaugruppe (113), die stromabwärts der Schubbaugruppe (108) angeordnet ist und so konfiguriert ist, dass sie die Polymerisation der ersten Abdeckschicht (2) bewirkt,
**dadurch gekennzeichnet, dass** das laminare Element (4) auf seiner Oberfläche, die der ersten Abdeckschicht (2) zugewandt sein kann, frei von jeglichem Schutzfilm ist.

13. Anlage (200) zur Herstellung eines mehrschichtigen laminaren Produkts (6) nach Anspruch 12, **dadurch gekennzeichnet, dass** sie umfasst:
- stromabwärts der ersten Heizvorrichtung (104) eine zweite Auftragsbaugruppe (105), die stromabwärts der ersten Heizvorrichtung (104) angeordnet ist, um die erste Fläche (1a) des laminaren Trägers (1) oberhalb der ersten Abdeckschicht (2), die zumindest teilweise verfestigt ist, mit einer zweiten Abdeckschicht (3) aus Antihaftmaterial zu bedecken;
- eine zweite Heizvorrichtung (106), die so konfiguriert ist, dass sie die zweite Abdeckschicht (3) zumindest teilweise verfestigt.

14. Anlage (100, 200) nach einem der Ansprüche 12 oder 13, **dadurch gekennzeichnet, dass** das laminare Element (4) in Form eines Bandes vorgesehen ist, wobei die zweite Zuführvorrichtung (112) eine erste Spule (117), von der das Band des laminaren Elements (4) abgewickelt wird, und eine zweite Spule (118) umfasst, auf die das Band des laminaren Elements (4) aufgewickelt wird, wobei die erste Spule (117) und die zweite Spule (118) in der Anlage (100, 200) so angeordnet sind, dass das Band des laminaren Elements (4) zwischen dem laminaren Träger (1) und der geprägten Oberfläche (107) angeordnet ist, wenn die Schubbaugruppe (108) den Schub der geprägten Oberfläche (107) gegen die zweite Abdeckschicht (3) ausübt, die auf dem laminaren Träger (1) aufgebracht ist.

15. Anlage (100, 200) nach einem der Ansprüche 12 bis 14, **dadurch gekennzeichnet, dass** die geprägte Oberfläche (107) zu einem Prägezylinder (109) gehört.

## Revendications

1. Procédé de fabrication d'un produit laminaire multicouche (6), comprenant les opérations suivantes:
- fournir un support laminaire (1), ledit support laminaire (1) étant un cuir ou un tissu;
- recouvrir une première face (1a) dudit support laminaire (1) d'une première couche de recouvrement (2) en résine polymère, ladite opération de recouvrement permettant de recouvrir ladite première face (1a) d'une quantité de ladite première couche de recouvrement (2) comprise entre 22 et 215 grammes par mètre carré (2 et 20 grammes par pied carré), plus préférentiellement ladite quantité étant comprise entre 75 et 129 grammes par mètre carré (7 et 12 grammes par pied carré);
- consolider, au moins partiellement, ladite première couche de recouvrement (2), ladite étape de consolidation prévoyant de réduire le poids au pied carré de ladite première couche de recouvrement (2) en aval de ladite consolidation d'un pourcentage compris entre 35% et 55% par rapport au poids au pied carré de ladite première couche de recouvrement (2) en amont de ladite consolidation;
- fournir un élément laminaire (4) au-dessus de ladite première couche de recouvrement (2), ledit élément laminaire (4) étant en un matériau choisi parmi le polyéthylène, le nylon ou le polyester avec une épaisseur comprise entre 5 microns et 50 microns, encore plus préférentiellement entre 8 microns et 30 microns, spécifiquement avec une épaisseur égale à 15 microns, ledit élément laminaire (4) ayant une surface lisse;
- pousser une surface gaufrée (107) contre ladite première couche de recouvrement (2) avec interposition dudit élément laminaire (4) pour imprimer sur ladite première couche de recouvrement (2) le motif de ladite surface gaufrée (107);
- après avoir imprimé ledit motif, provoquer la polymérisation de ladite première couche de recouvrement (2) pour obtenir une couche de recouvrement stabilisée (5),
**caractérisé en ce que** ledit élément laminaire (4) est dépourvu de toute pellicule protectrice sur sa surface destinée à faire face à ladite première couche de recouvrement.

2. Procédé selon la revendication 1, **caractérisé par** le fait de fournir, après ladite opération de consolidation de ladite première couche de recouvrement (2) et avant ladite fourniture dudit élément laminaire (4), l'exécution des opérations suivantes:
- recouvrir ladite première face (1a) dudit support laminaire (1), au-dessus de ladite première couche de recouvrement (2), au moins partiellement consolidée, d'une deuxième couche de recouvrement (3) en matériau anti-adhérent;
- consolider, au moins partiellement, ladite deuxième couche de recouvrement (3) dans un matériau anti-adhérent avant de pousser ladite surface gaufrée (107) contre ladite deuxième couche de recouvrement (3).

3. Procédé selon la revendication 2, **caractérisé en ce que** ladite deuxième couche de recouvrement (3) en matériau anti-adhérent est composée d'une substance liquide ou visqueuse comprenant un ou plusieurs polymères choisis parmi les polymères de polyuréthane, de silicone, d'ETFE, de FEP, de PTFE et de PEEK.

4. Procédé selon l'une quelconque des revendications 2 ou 3, **caractérisé en ce que** ladite deuxième opération de recouvrement prévoit de recouvrir ladite première face (1a) d'une quantité de ladite deuxième couche de recouvrement (2) comprise entre 1 et 6 grammes par pied carré et, encore plus préférentiellement, ladite quantité de ladite deuxième couche de recouvrement (2) est sensiblement égale à 3 grammes par pied carré.

5. Procédé selon l'une quelconque des revendications précédentes, **caractérisé en ce que** ladite surface gaufrée (107) appartient à un cylindre de gaufrage (109).

6. Procédé selon la revendication 5, **caractérisé en ce que** ladite surface gaufrée (107) dudit cylindre de gaufrage (109) a une rugosité comprise entre 3 microns et 400 microns.

7. Procédé selon l'une quelconque des revendications précédentes, **caractérisé en ce que** lors de ladite étape de poussée de ladite surface gaufrée (107) contre ladite première couche de recouvrement (2), une étape de chauffage préférentiellement réalisée à une température comprise entre 60 °C et 190 °C, encore plus préférentiellement entre 70 °C et 120 °C, est simultanément réalisée afin d'amorcer la polymérisation de ladite première couche de recouvrement (2).

8. Procédé selon l'une quelconque des revendications précédentes, **caractérisé en ce que** ladite étape de polymérisation après ladite impression dudit motif envisage de chauffer ladite première couche de recouvrement (2) au moyen d'un four à vapeur, dont la température de fonctionnement est fixée entre 65 °C et 90 °C, encore plus préférentiellement entre 75 °C et 80 °C.

9. Procédé selon l'une quelconque des revendications précédentes, **caractérisé en ce que** ledit support laminaire (1) est avancé dans une installation (100) selon une direction d'avancement X à une vitesse d'avancement prédéterminée comprise entre 5 et 20 mètres par minute, encore plus préférentiellement entre 8 et 14 mètres par minute.

10. Procédé selon l'une quelconque des revendications précédentes, **caractérisé en ce que** ladite étape de consolidation partielle a lieu en chauffant ladite première couche de recouvrement (2) à une température comprise entre 35 °C et 80 °C, encore plus préférentiellement entre 45 °C et 70 °C.

11. Procédé selon l'une quelconque des revendications précédentes, **caractérisé en ce que** ladite étape de poussée est réalisée avec une pression comprise entre 20 et 100 kg/cm² et, de manière encore plus préférentielle, entre 50 et 70 kg/cm².

12. Installation (100, 200) pour la production d'un produit laminaire multicouche (6), comprenant dans l'ordre, selon une direction d'avancement (X):
- un premier dispositif d'alimentation (102) pour faire avancer un support laminaire (1) à une vitesse d'avancement prédéterminée;
- un premier ensemble applicateur (103) pour recouvrir une première face (1a) dudit support laminaire (1) avec une première couche de recouvrement (2) en résine polymère, ledit premier ensemble applicateur (103) étant configuré pour recouvrir ladite première face (1a) avec une quantité de ladite première couche de recouvrement (2) comprise entre 22 et 215 grammes par mètre carré (2 et 20 grammes par pied carré), plus préférentiellement ladite quantité étant comprise entre 75 et 129 grammes par mètre carré (7 et 12 grammes par pied carré);
- un premier chauffage (104) configuré pour consolider, au moins partiellement, ladite première couche de recouvrement (2), ledit premier chauffage (104) étant configuré pour réduire le poids au pied carré de ladite première couche de recouvrement (2) en aval de ladite consolidation d'un pourcentage compris entre 35% et 55% par rapport au poids au pied carré de ladite première couche de recouvrement (2) en amont de ladite consolidation;
- un élément laminaire (4) en matériau choisi parmi le polyéthylène, le nylon ou le polyester d'une épaisseur comprise entre 5 microns et 50 microns, encore plus préférentiellement entre 8 microns et 30 microns, en particulier d'une épaisseur égale à 15 microns, ledit élément laminaire (4) ayant une surface lisse;
- un deuxième dispositif d'alimentation (112) pour faire avancer ledit élément laminaire (4) à une vitesse correspondant à ladite vitesse d'avancement;
- un ensemble de poussée (108) comprenant une surface gaufrée (107) disposée en aval dudit premier chauffage (104), configuré pour pousser ladite surface gaufrée (107) contre ladite première couche de recouvrement (2), avec interposition dudit élément laminaire (4), de manière à imprimer sur ladite première couche de recouvrement (2) le motif de ladite surface gaufrée (107);
- un ensemble de traitement (113) disposé en aval dudit ensemble de poussée (108), configuré pour provoquer la polymérisation de ladite première couche de recouvrement (2),
**caractérisé en ce que** ledit élément laminaire (4) est dépourvu de toute pellicule protectrice sur sa surface destinée à faire face à ladite première couche de recouvrement (2).

13. Installation (200) pour la production d'un produit laminaire multicouche (6), selon la revendication 12, **caractérisée en ce que** elle comprend:
- en aval dudit premier chauffage (104), un deuxième ensemble applicateur (105) disposé en aval dudit premier chauffage (104), pour recouvrir ladite première face (1a) dudit support laminaire (1), au-dessus de ladite première couche de recouvrement (2), au moins partiellement consolidée, d'une deuxième couche de recouvrement (3) en matériau anti-adhérent;
- un deuxième chauffage (106) configuré pour consolider, au moins partiellement, ladite deuxième couche de recouvrement (3).

14. Installation (100, 200) selon l'une quelconque des revendications 12 ou 13, **caractérisée en ce que** ledit élément laminaire (4) est fourni sous forme de bande, ledit deuxième dispositif d'alimentation (112) comprenant une première bobine (117) à partir de laquelle ladite bande dudit élément laminaire (4) est déroulée et une deuxième bobine (118) sur laquelle ladite bande dudit élément laminaire (4) est enroulée, ladite première bobine (117) et ladite deuxième bobine (118) étant disposées dans ladite installation (100, 200) de sorte que ladite bande dudit élément laminaire (4) est interposée entre ledit support laminaire (1) et ladite surface gaufrée (107) lorsque ledit ensemble de poussée (108) exerce ladite poussée de ladite surface gaufrée (107) contre ladite deuxième couche de recouvrement (3) appliquée sur ledit support laminaire (1).

15. Installation (100, 200) selon l'une quelconque des revendications 12 à 14, **caractérisée en ce que** ladite surface gaufrée (107) appartient à un cylindre de gaufrage (109).
